# EUROPÄISCHE PATENTSCHRIFT

(11) **EP 1 461 530 B1**
(45) Veröffentlichungstag und Bekanntmachung des Hinweises auf die Patenterteilung: **24.06.2015**
(21) Anmeldenummer: 02799741.0
(22) Anmeldetag: 06.12.2002
(51) Int. Cl.: F21V 8/00, F21W 111/00, F21W 111/06, F03D 11/00

(54) **VERFAHREN ZUM ERMITTELN DER AUSLENKUNG EINES ROTORBLATTS EINER WINDENERGIEANLAGE**
METHOD FOR ESTABLISHING THE BENDING OF A ROTOR BLADE OF A WIND POWER INSTALLATION
MÉTHODE POUR DÉTERMINER LA FLEXION D'UNE PALE DE ROTOR POUR INSTALLATION D'ENERGIE EOLIENNE

(30) Priorität: 08.12.2001 DE 10160360; 26.06.2002 DE 10228442
(43) Veröffentlichungstag der Anmeldung: 29.09.2004
(60) Teilanmeldung: 09178649.1
(73) Patentinhaber: Wobben Properties GmbH, 26605 Aurich (DE)
(72) Erfinder: Aloys Wobben, 26607 Aurich (DE)
(74) Vertreter: Eisenführ Speiser
(86) Internationale Anmeldenummer: PCT/EP2002/013845
(87) Internationale Veröffentlichungsnummer: WO 2003/050412

(56) Entgegenhaltungen:
- WO-A-01/86606
- DE-C- 676 166
- DE-U- 20 021 970
- DE-U- 20 101 375
- DE-U- 20 103 294
- GB-A- 2 093 617
- US-A- 5 321 257
- DATABASE WPI Section PQ, Week 198432 Derwent Publications Ltd., London, GB; Class Q71, AN 1984-199365 XP002231751 -& SE 8 206 718 A (ALLMANNA INGENJORSB), 25. Juni 1984 (1984-06-25)

## Beschreibung

Windenergieanlagen mit Rotorblättern der verschiedensten Art sind bereits seit längerem bekannt. Auch ist es bekannt, dass in bestimmten Situationen die Windenergieanlage mit einem Gefahrenfeuer ausgerüstet werden muss, um den Flugverkehr im Gebiet der Windenergieanlage rechtzeitig auf die Existenz der Windenergieanlage hinzuweisen. Es ist zu dem vorgenannten Zweck auch bekannt, die Rotorblätter mit meist roten Warnanstrichen zu versehen, so dass die Kollision eines Flugzeuges, insbesondere eines Militärflugzeugs, mit einer Windenergieanlage bzw. dessen Rotors vermieden werden kann.

Auch ist bereits der Vorschlag gemacht worden, zur Verbesserung der Warnung für den Flugverkehr an den Rotorblattspitzen der Rotorblätter, neben der Farbgebung mit Signalfarben, Glühlampen oder andere Leuchtmittel einzusetzen, die dann bei Nacht eingeschaltet sind und somit vom Flugverkehr gut erkannt werden können. Der Nachteil von Glühlampen oder anderen Leuchtmitteln besteht aber darin, dass sie nur über eine begrenzte Haltbarkeit verfügen und die Kosten für das Austauschen von verbrauchten Leuchtmitteln in keinem vernünftigen Verhältnis zum Nutzen stehen. So können die Kosten für das Austauschen von Leuchtmitteln an der Rotorblattspitze mehrere 1.000 DM betragen, weil sehr aufwendig nicht nur die Windenergieanlage angehalten werden muss, sondern auch das Servicepersonal mittels einer Kranvorrichtung vom Turm der Windenergieanlage aus oder vom Boden vor der Windenergieanlage aus an die Rotorblattspitze herangebracht werden muss.

Dieser Aufwand steht in einem krassen Missverhältnis zum eigentlichen technischen Ausfall.

Als Ausweg ist daher auch bereits vorgeschlagen worden, die Beleuchtungseinrichtung an der Rotorblattspitze redundant auszuführen. Aber auch eine solche Konzeption kann nicht immer verhindern, dass es zu einem Ausfall der Beleuchtung kommt, wobei die Gründe für den Ausfall der Leuchtmittel äußerst verschieden sein können, sei es, dass die Leuchtmittel an der Rotorblattspitze mechanisch beschädigt werden (zusammentreffen mit Partikeln, Hagel, Regen etc.) oder dass die jeweiligen elektrischen Kontakte unterbrochen sind oder auch andere Gründe.

Die Erfindung basiert auf dem Gedanken, die gesamten Leuchtmittel aus dem Tipbereich (Rotorblattspitze) der Rotorblätter in den nabennahen Bereich, z. B. die Nabe des Rotors selbst, zu verlegen. Fällt dann ein Leuchtmittel aus, so kann es vom Service sehr leicht und sehr unkompliziert ausgetauscht werden.

Während die Leuchtmittel, also eine Licht erzeugende Einrichtung wie z. B. ein Laser oder eine Leuchtdiode oder eine Vielzahl hiervon, in der Gondel der Windenergieanlage untergebracht ist, wird das erzeugte Licht in ein Glasfaserkabel (Lichtwellenleiter, Lichtleiter) eingespeist, welches seinerseits bis in den Tipbereich des Rotorblatts verlegt ist und dort an der Oberfläche des Rotorblatts so angeordnet ist, dass das Licht ohne weiteres austreten kann.

Selbst wenn, was sehr unwahrscheinlich ist, es einmal zu einer Beschädigung des Endbereichs des Lichtwellenleiters im Tipbereich kommen sollte, führt dies nicht zum Ausfall des gesamten Lichtwellenleiters, sondern dieser wird weiterhin sein Licht, welches durch ihn geführt wird, ausstrahlen. Da aber im Tipbereich keinerlei elektrische Elemente liegen, sind die Lichtwellenleiter sehr geschützt.

Das Verlegen derartiger Lichtwellenleiter führt zu einem gewissen Aufwand bei der Produktion der Rotorblätter, sodass sich die Ausrüstung der Rotorblätter mit dem Lichtwellenleiter bei bestimmen Typen von Windenergieanlagen aus wirtschaftlichen Aspekten nicht lohnt.

Es ist ferner zum Beispiel aus JP-A-2000-18147 bekannt, ein Rotorblatt mit einem Lichtwellenleiter zu versehen, wobei der Lichtwellenleiter hier dient, um ein gebrochenes Rotorblatt zu detektieren. Eine derartige weitere Verwendung des Lichtwellenleiters erhöht demnach den Nutzen eines Lichtwellenleiters im Rotorblatt, wobei es wünschenswert ist, noch weitere Einsatzmöglichkeiten des Lichtwellenleiters zu finden.

Daher ist es Aufgabe der Erfindung weitere Einsatzmöglichkeiten für in den Rotorblättern verlegte Lichtwellenleiter zu finden, um den Mehraufwand bei der Verlegung der Lichtwellenleiter wirtschaftlich interessanter zu gestalten.

Die Aufgabe wird mit der Erfindung mit den Merkmalen nach Anspruch 1 gelöst. Eine vorteilhafte Weiterbildung ist in dem Unteranspruch beschrieben.

Die Erfindung schlägt vor, die Lichtleiter dafür zu verwenden, eventuelle Belastungsmessungen am Rotorblatt selbst vorzunehmen.

Hierzu sei allgemein auf Folgendes verwiesen: Wird in einen Lichtleiter Licht eingetragen, so reflektiert dieses Licht im Inneren dieses Leiters an entsprechenden Kanten und setzt sich bis zum Austritt am Lichtleiterende fort.

Aus dem Quotienten der eingetragenen Lichtmenge zur austretenden Lichtmenge lässt sich auch ein Wert für die Güte annehmen, wobei die Güte im optimalen Fall eins beträgt, wenn also die in den Lichtleiter eingespeiste Lichtmenge der Intensität (Lumen) der Lichtmenge am austretenden Ende des Lichtleiters entspricht.

Die Güte von Lichtleitern richtet sich aber nicht nur nach dem Material des Lichtleiters oder nach der Art des eingebrachten Lichtes, sondern auch nach der Verlegung des Lichtleiters. Ist beispielsweise der Lichtleiter entlang einer Geraden verlegt, ist die Güte regelmäßig größer, als wenn der Lichtleiter in verschiedenen Serpentinen oder Bögen oder andere Krümmungsradien aufweisenden Geometrien verlegt ist.

Auch führt eine Bewegung des Lichtleiters quer zu seiner Streckrichtung dazu, dass die Fortsetzung des Lichts im Inneren des Lichtleiters zum Teil eingeschränkt ist, was dazu führt, dass die Güte insgesamt absinkt.

Diesen - zuletzt erwähnten - Effekt kann man sich bei einem Rotorblatt einer Windenergieanlage erfindungsgemäß auch dafür zu Nutze machen, die Durchbiegung des Rotorblatts optisch/elektrisch zu messen, indem ein Lichtleiter quasi als Schlaufe, beginnend von der Rotorblattnabe über eine bestimmte Führung im Rotorblatt über die Rotorblattspitze und wieder zurück zur Nabe geführt wird. Am austretenden Ende des Lichtleiters wird dann ein entsprechender Detektor angeordnet, welcher die Intensität des austretenden Lichts misst und diese austretende Lichtmenge wird über eine entsprechende Verarbeitungseinrichtung (Prozessor) ständig ins Verhältnis zur in den Lichtleiter eintretenden Lichtmenge gesetzt.

Wenn nunmehr mit zunehmender Belastung des Rotorblatts (ansteigende Windgeschwindigkeit) dieses sich mehr und mehr durchbiegt, führt dies automatisch zu einer verschlechterten bzw. veränderten Güte und aus der konkreten Güte lässt sich ein Maß auch für die mechanische Belastung des Rotorblatts ableiten.

Mit der vorgenannten Variante der Erfindung lässt sich somit auch die Belastung eines Rotorblatts nicht nur integral an der Nabe, Rotorblattwurzel, sondern auch in einzelnen Punkten, insbesondere auch im Blattspitzenbereich, feststellen und eine evtl. Überdehnung der Rotorblattspitze aufgrund einer Böe oder eines anderen Ereignisses kann sehr schnell festgestellt werden, was auch gleichzeitig dazu ausgenutzt werden kann, die Windenergieanlage evtl. anzuhalten oder eine Verstellung des Rotorblattwinkels (Pitch) vorzunehmen, um den unerwünschten Überdehnungsfall auszuschließen, weil derartige Überlastfälle regelmäßig zu einer erheblichen Verkürzung der Lebensdauer der Rotorblätter und damit der gesamten Windenergieanlage führen können.

Es versteht sich von selbst, dass die Lichtleiter über die verschiedensten Geometrien im Rotorblatt selbst oder unterhalb der obersten Schicht des Rotorblatts oder auf dem Rotorblatt geführt werden können. Es ist nicht nur eine direkte Hin- und Rückleitung von der Rotorblattwurzel zur Rotorblattspitze auf einer Seite oder auf verschiedenen Seiten des Rotorblatts möglich, sondern auch die spiralförmige Umwicklung des gesamten Rotorblatts von der Rotorblattwurzel bis zur Rotorblattspitze und zurück oder es können auch verschiedene Bündel von Lichtwellenleitern über verschiedenste Geometrieverläufe des Rotorblatts (oder im Rotorblatt selbst) verlegt sein.

Je mehr ein Lichtleiter bei Verbiegung des Rotorblatts aus seiner Längsrichtung gebracht wird, umso höher wird regelmäßig auch der Abfall in der Güte sein und durch eine geschickte Messung und Vertauschung der Hin- und Rückleitungen lässt sich unter Umständen auch genau feststellen, wo eine unerwünschte Überdehnung eines Rotorblatts stattgefunden hat oder stattfindet.

Der Vorteil der Verlegung der Lichtwellenleiter im oder am Rotorblatt liegt auch darin, dass diese Verlegung bereits während der Produktion der Rotorblätter erfolgen kann und die Lichtleiter selbst regelmäßig äußerst robust sind und da die Lichtleiter selbst elektrisch nicht leitfähig sind, sind sie auch von daher schon gut gegen evtl. Störungen durch Blitzeinschlag im Rotor der Windenergieanlage geschützt.

Darüber hinaus kann mit den Licht(wellen)leitern eine evtl. Überlastung des Rotorblatts deutlich schneller gemessen werden, als beispielsweise mit einem Dehnungsmessstreifen (DMS) oder einer anderen Messeinrichtung, die die mechanische Belastung auf ein Rotorblatt integral im Nabenbereich bzw. Blattwurzelbereich des Rotorblatt misst. Da über den Lichtdetektor am austretenden Ende des Lichtwellenleiters auch gleich ein elektrisches Signal über die Intensität des austretenden Lichts bereitsteht, kann dieses elektrische Signal auch einer Fernüberwachungsstelle der Windenergieanlage direkt zugeführt und dort entsprechend ausgewertet und zu einem sehr zügigen Eingriff in die Anlage verwendet werden, wenn nicht bereits automatische Stellvorrichtungen vorgesehen sind, die bei Unterschreiten einer bestimmten Güte selbsttätig eine Anlagensteuerung bzw. Änderung vornehmen, die zu einer Entlastung der Rotorblätter führt.

Bei der Verlegung der Lichtwellenleiter als Rotorblattspitzenbeleuchtung (Tip-Beleuchtung) kann es auch geeignet sein, dass die Tip-Beleuchtung nicht über den gesamten Umdrehungsumfang des Rotors eingeschaltet ist, sondern nur dann, wenn das jeweilige Rotorblatt sich in einem Bereich zwischen der Neun-Uhr- und Drei-Uhr-Position (des Rotorblatt dreht im Uhrzeigersinn) befindet oder bevorzugt nur im Bereich zwischen der Zehn-Uhr- und Zwei-Uhr-Position.

Auch ist es möglich, durch die Einspeisung von Licht mittels Dioden nicht nur einfarbiges weißes Licht in den Lichtwellenleiter einzuspeisen, sondern auch verschiedenfarbiges Licht und durch den entsprechenden Austritt der Lichtwellenleiter an der Rotorblattspitze kann das Licht auch in verschiedene Richtungen direkt abgestrahlt werden, wobei zur Erhöhung der Intensität die Enden des Lichtwellenleiters mit einer entsprechenden Linse versehen sind, die ihrerseits gleichzeitig auch das entsprechende Ende des Lichtwellenleiters nochmals schützt.

Die Erfindung ist anhand eines konkreten Ausführungsbeispiels nachfolgend dargestellt. Darin zeigen:
Figur 1 ein erstes Ausführungsbeispiel eines erfindungsgemäßen Rotorblatts,
Figur 2 ein nicht zur beanspruchten Erfindung gehörendes Ausführungsbeispiel eines Rotorblatts.

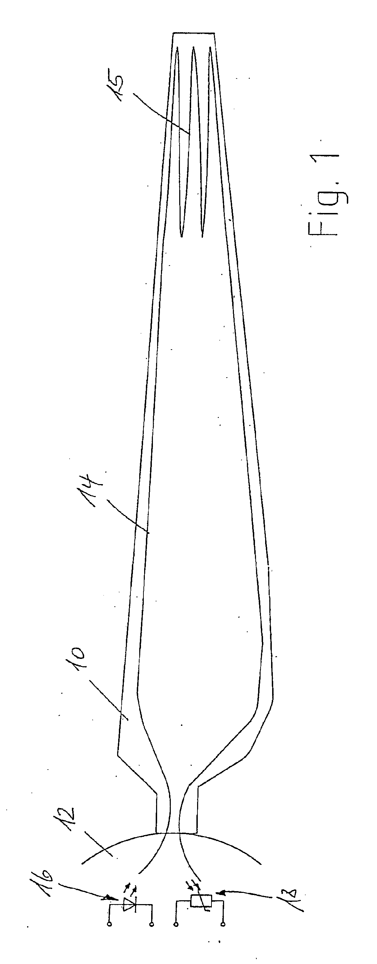

Figur 1 zeigt ein Rotorblatt 10 mit einem darauf (oder darin) verlegten Lichtwellenleiter 14, welcher im Bereich der Rotorblattspitze 15 mäanderförmig verlegt ist. An einem Anschluss des Lichtwellenleiters 14 ist eine Lichtdiode 16 angeordnet und am anderen Anschluss ist eine entsprechende Lichtempfangsdiode 18 angeordnet. Mit der Lichtdiode wird Licht in den Lichtwellenleiter eingespeist und die Empfangsdiode 18 empfängt das durch den Lichtleiter getretene Licht.

Bevor nun die Windenergieanlage in Betrieb genommen wird und das Rotorblatt völlig unausgelenkt ist (also nicht mehr durch den Wind verformt ist), werden nunmehr Referenzmessungen vorgenommen, wobei in der Lichtempfangseinheit 18 die Menge des empfangenen Lichts gemessen wird. Der Lichtmengenanteil lässt sich üblicherweise auch in einem Prozentwert ausdrücken, wobei der Prozentwert stets unter 100 % liegt. Bei einem gemessenen Wert von 100 % müsste das gesamte von der Sendeeinheit 16 ausgesandte Licht durch den Lichtwellenleiter 14 in der Empfangseinheit 18 ankommen und die Güte würde dann 1 betragen.

Wenn nunmehr die Windenergieanlage in Betrieb genommen wird, führt dies aufgrund des Wind- und Staudrucks auch dazu, dass das gesamte Rotorblatt insbesondere im Spitzenbereich ausgelenkt wird. Damit einher geht auch gleichzeitig eine Veränderung der ursprünglichen Lage der Lichtwellenleiter, was regelmäßig auch zu einem anderem Reflexionsweg innerhalb des Lichtwellenleiters führt. Die Folge dessen ist regelmäßig eine Reduktion der Lichtausbeute gegenüber dem Referenzzustand und diese geringere Lichtausbeute wird in der Empfangseinheit 18 gemessen.

Mithin kann auch durch die Lichtmengenmessung (Lichtmodulationsmessung) in der Empfangseinheit 18 (oder Lichtmodulationsmessung) ein Maß für die Auslenkung des Rotorblatts ermittelt werden, da die Güte bei Auslenkung des Blattes unterhalb der Güte im Referenzzustand liegt.

Wenn bestimmte Überdehnungen eines Rotorblatts unerwünscht sind, d.h. die Güte sinkt unter einen vorbestimmten Wert, kann auch dies mittels der Erfindung überwacht werden und im Bedarfsfall können auch die gemessenen Daten dazu verwendet werden, die gesamte Windenergieanlage zum Eigenschutz abzustellen.

Vorbeschriebene erfindungsgemäße Alternative hat auch den Vorteil, dass bei einem evtl. Haarriss im Rotorblatt der Windenergieanlage, wobei der Haarriss im Wesentlichen quer zum Lichtleiter verläuft, der Lichtleiter sehr schnell abgerissen wird, so dass die gesamte Lichtübertragung dann nicht nur gestört werden, sondern auch zusammenbrechen kann. Dieser Abriss eines Lichtleiters kann deshalb erfolgen, weil die Lichtleiter regelmäßig bezüglich ihrer Längenausdehnung äußerst porös konzipiert sind und nur gering elastisch sind. Wenn nunmehr durch einen Haarriss die Lichtübertragung durch den Lichtleiter empfindlich gestört ist, kann die gesamte Anlage angehalten werden und das Rotorblatt frühzeitig sehr genau auf evtl. Haarrisse untersucht werden.

In Figur 1 ist die Einrichtung zur Weiterverarbeitung des gemessenen Lichts nicht dargestellt. Hierbei kann es sich um übliche Einrichtungen handeln, die aus der gemessenen Lichtmenge ein elektrisches Signal erzeugen und das entsprechende elektrische Signal wird dann in einem Prozessor oder einer anderen Verarbeitungseinrichtung so weiter verarbeitet, dass der Lichtmengenwert des empfangenen Lichtes ermittelt wird, welcher dann auch ggf. ins Verhältnis zur Menge des in den Lichtleiter eingetretenen Lichtes gesetzt werden kann. Aus diesem Differenzwert lässt sich unmittelbar der Wert für die Güte (Menge des ausgesendeten Licht/Menge des empfangenen Lichts) ableiten. Es bietet sich an, in einem entsprechenden Speicher eine Tabelle für bestimmte Güten vorzusehen, bei deren Unter- oder Überschreitung dann entsprechend gewünschte Maßnahmen bei der Windenergieanlage getroffen werden können, beispielsweise die Abschaltung der Anlage.

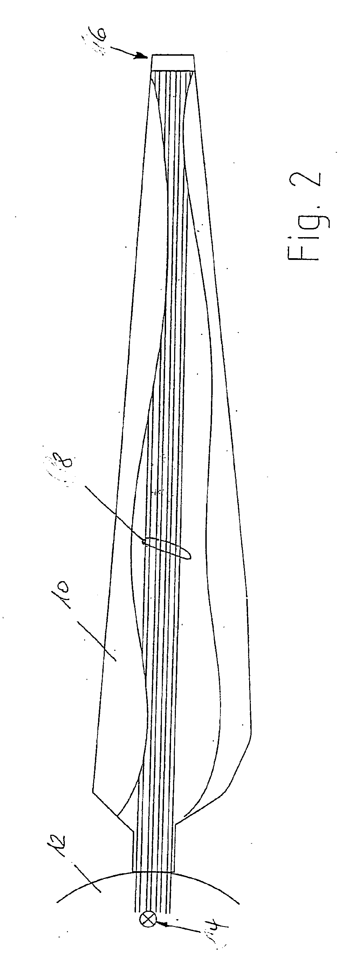

Figur 2 zeigt ein Bündel von Lichtwellenleitern, die von der Nabe des Rotorblatts (Rotorblattwurzel) bis zur Rotorblattspitze (Tip) verlegt sind. Im Nabenbereich wird mittels einer Leuchte 4 Licht in die Lichtwellenleiter eingespeist und im Tipbereich tritt das Licht aus den Lichtwellenleitern aus, so dass der Tipbereich wenigstens nachts gut leuchtet und damit der Flugverkehr auf die Windenergieanlage aufmerksam gemacht wird.

Selbstverständlich können die vorgenannten Alternativen auch miteinander kombiniert werden, so dass neben einem beleuchteten Tip auch eine Überwachung der Lichtverbiegung eines Rotorblatts vorgenommen werden kann. Die Leuchte 4 kann hierbei auch eine Leuchtsendediode darstellen.

Es versteht sich von selbst, dass die Einschaltung der Leuchten 4 und 6 abhängig gemacht werden kann von der jeweiligen Tageszeit, Dunkelheit oder der jeweiligen Stellung eines einzelnen Rotorblatts, z.B. Einschalten der Leuchten, wenn ein Rotorblatt sich in einer 10.00 Uhr- bis 12.00 Uhr/14.00 Uhr-Position befindet.

Diese Maßnahme hat den Vorteil, dass einerseits die Leuchtmittel geschont werden und darüber hinaus das Aufleuchten nur in einer Rotorblattposition erfolgt, wo das Rotorblatt weiterhin sichtbar ist. Darüber hinaus wird mit dem Einschalten der Leuchtmittel die Störung für die Umgebung um die Windenergieanlage herum möglichst gering gehalten.

Es liegt auf der Hand, die beschriebene Tipbeleuchtung mittels eines Lichtwellenleiters auch mittels anderer Leuchtmittel durchzuführen z.B. LEDs, die dann durch entsprechende Kabel mit Strom versorgt werden.

Die Steuereinrichtung zur Steuerung der Leuchtmittel ist bevorzugt mit der Windenergieanlagensteuerung gekoppelt, damit ein Rotorblatt-positionsabhängiges Einschalten der Leuchtmittel erfolgen kann.

## Patentansprüche

1. Verfahren zum Ermitteln der Auslenkung eines Rotorblatts (10) einer Windenergieanlage mit einem Rotorblattanschluss zum Anschluss an eine Nabe des Rotors einer Windenergieanlage und einer Blattspitze, die am Rotorblatt (10) gegenüberliegenden Ende des Rotorblatts liegt,
**dadurch gekennzeichnet, dass** über die Länge des Rotorblatts ein Lichtleiter (14) verlegt ist, wobei im Eintrittsende des Lichtleiters (14) Licht eintritt und am Austrittsende des Lichtleiters (14) das Licht wieder austritt und ein Detektor vorgesehen ist, der die Menge des austretenden Lichts detektiert und dass der Detektor mit einer Auswerteeinrichtung verbunden ist, die die Menge des eintretenden und des austretenden Lichts bewertet und somit ein Maß für die Auslenkung des Rotorblatts (10) im Betrieb der Windenergieanlage ermittelt.

2. Verfahren nach Anspruch 1,
**dadurch gekennzeichnet, dass** die Auswerteeinrichtung mit einer Steuereinrichtung der Windenergieanlage verbunden ist und die Windenergieanlage abgeschaltet wird oder eine Verstellung des Rotorblattwinkels (Pitch) des Rotorblattes (10) der Windenergieanlage vorgenommen wird, falls die Menge des aus dem Lichtleiter (14) austretenden Licht einen vorbestimmten Wert unterschreitet.

## Claims

1. Method for establishing the deflection of a rotor blade (10) of a wind turbine having a rotor blade connection for connection to a hub of the rotor of a wind turbine and a blade tip which is located at the end of the rotor blade opposite the rotor blade (10),
**characterised in that** an optical waveguide (14) is laid over the length of the rotor blade, light entering at the inlet end of the optical waveguide (14) and the light being discharged again at the outlet end of the optical waveguide (14), and there being provided a detector which detects the quantity of light discharged, and **in that** the detector is connected to an evaluation device which evaluates the quantity of the light entering and being discharged and consequently establishes a measurement for the deflection of the rotor blade (10) during operation of the wind turbine.

2. Method according to claim 1,
**characterised in that** the evaluation device is connected to a control device of the wind turbine and the wind turbine is switched off or an adjustment of the rotor blade angle (pitch) of the rotor blade (10) of the wind turbine is carried out if the quantity of light discharged from the optical waveguide (14) falls below a predetermined value.

## Revendications

1. Procédé de détermination de la déviation d'une pale de rotor (10) d'une éolienne comprenant un raccord de pale de rotor pour le raccordement à un moyeu du rotor d'une éolienne et une pointe de pale qui est située sur la pale de rotor (10) à l'extrémité opposée de la pale de rotor, **caractérisé en ce qu'**un guide de lumière (14) est posé sur la longueur de la pale de rotor, de la lumière entrant dans l'extrémité d'entrée du guide de lumière (14) et la lumière sortant à l'extrémité de sortie du guide de lumière (14) et un détecteur qui détecte la quantité de lumière sortant étant prévu, et **en ce que** le détecteur est relié à un dispositif d'évaluation qui évalue la quantité de la lumière entrante et de la lumière sortante et détermine ainsi un degré de déviation de la pale de rotor (10) lorsque l'éolienne fonctionne.

2. Procédé selon la revendication 1, **caractérisé en ce que** le dispositif d'évaluation est relié à un dispositif de commande de l'éolienne et l'éolienne est arrêtée ou un réglage de l'angle (Pitch) de la pale de rotor (10) de l'éolienne est effectué dans le cas où la quantité de la lumière sortant du guide de lumière (14) passe en dessous d'une valeur prédéterminée.
